Europäisches Patentamt

**European Patent Office**

**Office européen des brevets**

(11) Veröffentlichungsnummer: **0 097 899**
**B1**

(19)

(12) **EUROPÄISCHE PATENTSCHRIFT**

(45) Veröffentlichungstag der Patentschrift:
**05.11.86**

(21) Anmeldenummer: **83105994.4**

(22) Anmeldetag: **20.06.83**

(51) Int. Cl.⁴: **C 08 G 18/08,** C 08 G 18/65,
B 01 J 19/00

(54) **Zweistufenverfahren zur Herstellung von thermoplastischen Polyurethan-Elastomeren.**

(30) Priorität: **30.06.82 DE 3224324**

(43) Veröffentlichungstag der Anmeldung:
**11.01.84 Patentblatt 84/2**

(45) Bekanntmachung des Hinweises auf die Patenterteilung:
**05.11.86 Patentblatt 86/45**

(84) Benannte Vertragsstaaten:
**AT BE CH DE FR GB IT LI NL SE**

(56) Entgegenhaltungen:
**FR-A-1 343 887**
**FR-A-1 556 517**
**FR-A-2 072 814**
**US-A-3 620 680**

(73) Patentinhaber: **BASF Aktiengesellschaft, Carl-Bosch- Strasse 38, D-6700 Ludwigshafen (DE)**

(72) Erfinder: **Zeitler, Gerhard, Dr., Lessingstrasse 11, D-6717 Hessheim (DE)**
Erfinder: **Werner, Frank, Dr., Waldstrasse 38b, D-6730 Neustadt (DE)**
Erfinder: **Bittner, Gerhard, Dr., Lohneufer 36, D-2840 Diepholz 1 (DE)**
Erfinder: **Baumann, Karl- Heinz, Dr., Panoramastrasse 4, D-6719 Battenberg (DE)**
Erfinder: **Roeber, Artur, Dackenheimer Strasse 6, D-6700 Ludwigshafen (DE)**
Erfinder: **Metzinger, Lothar, Dr., Heinrich-Pohlmann- Strasse 19, D-4500 Osnabrueck (DE)**
Erfinder: **Ohlinger, Rainer, Dr., Ziegelhaeusser Landstrasse 31, D-6900 Heidelberg (DE)**
Erfinder: **Zettler, Hans Dieter, Bueckelhaube 35, D-6718 Gruenstadt (DE)**

LIBER, STOCKHOLM 1986

EP 0 097 899 B1

## Beschreibung

Thermoplastische Polyurethan-Elastomere, im folgenden abgekürzt TPU genannt, sind seit langem bekannt. Ihre technische Bedeutung beruht auf der Kombination hochwertiger mechanischer Eigenschaften mit den Vorteilen der kostengünstigen Thermoplastverarbeitung. Durch die Verwendung unterschiedlicher chemischer Aufbaukomponenten läßt sich eine große Variationsbreite mechanischer Eigenschaften erzielen. Eine Übersicht über TPU, ihre Eigenschaften und Ahwendungen wird in Kunststoffe 68 (1978), Seiten 819-825 gegeben.

TPU können kontinuierlich oder diskontinuierlich nach verschiedenen Verfahren hergestellt werden. Als die bekanntesten werden das sogenannte Bandverfahren und das Extruderverfahren auch technisch genutzt.

Nach der GB-PS 1 057 018 wird aus einer im wesentlichen linearen polyhydroxylverbindung und überschüssigem organischen Diisocyanat ein Prepolymeres hergestellt, das über eine Dosierpumpe einem Mischkopf zugeführt und dort mit einer bestimmten Menge eines niedermolekularen Diols gemischt wird. Das erhaltene Reaktionsgemisch wird auf ein Förderband gebracht und durch einen auf 70 bis 130° C erhitzten Ofen geführt, bis es erstarrt. Das Reaktionsprodukt wird danach zerkleinert, bei Temperaturen bis 120° C 6 bis 40 Stunden getempert und kann so z.B. mit Spritzgußmaschinen zu Formkörpern verarbeitet werden. Das Nachtempern und das Zerkleinern sind hierbei Arbeitsgänge, die das Bandverfahren nachteilig wirtschaftlich belasten.

Beim Extruderverfahren, das z.B. in der DE-OS 20 59 570 (US 3 642 964) beschreben wird, werden die Aufbaukomponenten direkt in den Extruder eingebracht und die Reaktion im Extruder unter bestimmten Verfahrensbedingungen durchgeführt. Das gebildete Polyurethan-Elastomere wird in den thermoplastischen Zustand übergeführt, als Strang extrudiert, in einer Inertgasatmosphäre bis zum Erstarren abgekühlt und zerkleinert. Nachteilig an diesem Verfahren ist, daß die erhaltenen TPU nicht für die Herstellung von Folien oder von feinen Profilen und Schläuchen geeignet sind. TPU gleicher Zusammensetzung sind nach dem Extruderverfahren transparent, während sie nach dem Bandverfahren ein opakes Aussehen aufweisen. Opake TPU können zu Folien verarbeitet werden, die kein Blocken zeigen, während transparente TPU hierfür ungeeignet sind. Nachteilig am Bandverfahren ist jedoch seine geringe Wirtschaftlichkeit.

Nach Angaben der FR-A-1 343 887 (DE-A-1 300 691) werden lagerfähige, allein durch Wärme und Druck verformbare thermoplastische Polyurethane nach dem Band- oder Gießverfahren durch Umsetzung von im wesentlichen linearen Polyhydroxylverbindungen mit einem Molekulargewicht von mindestens 600, Diisocyanaten und einem Gemisch aus einer bifunktionellen Verbindung mit reaktionsfähigen Wasserstoffatomen und einem dreiwertigen Alkohol mit ausschließlich sekundären Hydroxylgruppen als Kettenverlängerungsmittel hergestellt. Hierzu wird die flüssige Reaktionsmischung auf einer Unterlage bei 60 bis 135° C bis zur Verfestigung zur Reaktion gebracht. Das nicht ausreagierte Polyurethan wird danach mit Hilfe eines Extruders bei Temperaturen bis 260° C unter Formgebung ausgehärtet. Die ausgehärteten Formkörper sind aufgrund des Einbaus der dreiwertigen Alkoholreste räumlich vernetzt und daher nicht mehr thermoplastisch.

Die Aufgabe der vorliegenden Erfindung bestand darin, TPU nach einem wirtschaftlichen Verfahren mit verbesserten mechanischen Eigenschaften herzustellen, die entsprechend den nach dem Bandverfahren erhaltenen TPU zu Formkörpern verarbeitet werden können.

Diese Aufgabe konnte überraschenderweise gelöst werden durch ein Verfahren zur Herstellung von thermoplastischen Polyurethan-Elastomeren durch Umsetzung von
    a) organischen Diisocyanaten,
    b) Polyhydroxylverbindungen mit Molekulargewichten von 500 bis 8000 und
    c) Kettenverlängerungsmitteln mit Molekulargewichten von 60 bis 400
    in Gegenwart von
    d) Katalysatoren und gegebenenfalls
    e) Hilfsmitteln und/oder
    f) Zusatzstoffen
bei Temperaturen von 60 bis 250° C, das dadurch gekennzeichnet ist, daß man die Umsetzung in zwei Reaktionsstufen durchführt, wobei man in der 1. Reaktionsstufe die Aufbaukomponenten (a) bis (d) und gegebenenfalls (e) und/oder (f) kontinuierlich mischt, die Reaktionsmischung auf einen Träger aufbringt und bei Temperaturen von 60 bis 200° C bis zur Erstarrung reagieren Läßt und danach in der 2. Reaktionsstufe die erstarrte Reaktionsmischung in einem Extruder aufschmilzt, bei Temperaturen von 140 bis 250° C die Reaktion zu Ende führt und das extrudierte Polyurethan-Elastomere direkt in einer Inertgasatmosphäre durch Heißabschlag granuliert.

Das erfindungsgemäße Verfahren hat den Vorteil, daß es ähnlich dem Bandverfahren zu TPU mit ausgezeichneten mechanischen Eigenschaften führt und gleichzeitig hohe Durchsätze erlaubt. Da die exotherme Polyurethan-Polyadditonsreaktion auf einem Träger, vorzugsweise einem Förderband aus thermoplastischem Kunststoff durchgeführt wird, kann die Wärmeab- und Wärmezufuhr und damit der Reaktionsablauf in Abhängigkeit von den eingesetzten Aufbaukomponenten und deren Mengen gezielt eingestellt werden. Somit wird nur die Ausreaktion zum TPU und dessen Plastifizierung in den Extruder verlegt.

Zu den Aufbaukomponenten (a) bis (d) und gegebenenfalls (e) und/oder (f), die nach dem erfindungsgemäßen Verfahren zu TPU umgesetzt werden können, ist folgendes auszuführen:

a) Als organische Diisocyante (a) kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat, cycloaliphatische Diisocyanate, wie Isophoron-diisocyanat, 1,4° Cyclo-hexan-diisocyanat, 1-Methyl-2,4- und -2,6-cyclohexan-diisocyanat sowie die entsprechenden Isomerengemische, 4,4'-, 2,4'- und 2,2'-Dicyclohexyl-methan-di-isocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat, 4,4'-, 2,4'- und 2,2'-Diphenylmethan-diisocyanat, Gemische aus 2,4'- und 4,4'-Diphenylmethan-diisocyanat, urethanmodifizierte flüssige 4,4'- und/oder 2,4'-Diphenylmethan-diisocyanate und 1,5-Naphthylen-diisocyanat. Vorzugsweise verwendet werden Hexamethylen-diisocyanat, Isophoron-diisocyanat, Diphenylmethan-diisocyanat-Isomerengemische mit einem 4,4'-Diphenylmethan-diisocyanatgehalt von größer als 96 Gew.% und insbesondere 4,4'-Diphenylmethan-diisocyanat und 1,5-Naphthylen-diisocyanat.

b) Als höhermolekulare Polyhydroxylverbindungen (b) mit Molekulargewichten von 500 bis 8000 eignen sich vorzugsweise Polyetherole und insbesondere Polyesterole. In Betracht kommen jedoch auch andere hydroxylgruppenhaltige Polymere, beispielsweise Polyacetale, wie Polyoxymethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt Ethylenoxid, 1,2-Propylenoxid, Epichlorhydrin und 1,2- und 2,3-Butylenoxid. Vorzugsweise Anwendung finden Ethylenoxid und Mischungen aus Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanol-amine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans.

Vorzugsweise verwendet werden hydroxylgruppenhaltiges Polytetrahydrofuran und Polyetherole aus Propylenoxid und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist.

Solche Polyetherole können erhalten werden, indem man z.B. an das Startermolekül zunächst das Propylenoxid und daran anschließend das Ethylenoxid polymerisiert oder zunächst das gesamte Propylenoxid im Gemisch mit einem Teil des Ethylenoxids copolymerisiert und den oder schrittweise zunächst einen Teil des Ethylenoxids, dann das gesamte Propylenoxid und dann den Rest des Ethylenoxids an das Startermolekül anpolymerisiert.

Die im wesentlichen linearen Polyetherole besitzen Molekulargewichte von 500 bis 8 000, vorzugsweise 600 bis 6 000 und insbesondere 800 bis 3 500. Sie können sowohl einzeln als auch in Porm von Mischungen untereinander zur Anwendung kommen.

Geeignete Polyesterole können beispielsweise aus Dicarbonsäuren mit 2 bis 12 Kohlenstoffatomen und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyesterole kann es gegebenenfalls vorteilhaft sein, anstelle der Carbonsäuren die entsprechenden Carbonsäurederivate, wie Carbonsäureester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 16 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von ω-Hydroxycarbonsäuren, beispielsweise ω-Hydroxycapronsäure und vorzugsweise Polymerisationsprodukte von Lactonen, beispielsweise gegebenenfalls substituierten ω-Caprolactonen.

Als Polyesterole vorzugsweise verwendet werden Ethandiol-polyadipate, 1,4-Butandiol-polyadipate, Ethandiol-butandiol-polyadipate, 1,6-Hexandiol-neopentyl-glykol-polyadipate, 1,6-Hexandiol-1,4-butandiol-poly-adipate und Polycaprolactone.

Die Polyesterole besitzen Molekulargewichte von 500 bis 6 000, vorzugsweise von 800 bis 3 500.

c) Als Kettenverlängerungsmittel (c) mit Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexandiol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxy alkylenether des Hydrochinons, wie z.B. 1,4-Di-(β-hydroxyethyl)-hydrochinon, (cyclo)aliphatische Diamine, wie z.B. Isophoron-diamin, Ethylendiamin 1,2-, 1,3-Propylendiamin, N-Methyl-propylendiamin-1,3, N,N'-Dimethyl-ethylendiamin und aromatische Diamine, wie z.B. 2,4- und 2,6-Toluylendiamin, 3,5-Diethyl-2,4- und -2,6-toluylendiamin und primäre ortho-di-, tri- und/oder tetraalkylsubstituierte 4,4'-Diaminodiphenylmethane.

Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1:1 bis 1:12, insbesondere von 1:1,8 bis 1:4,4, wobei die Härte und der Schmelzpunkt der TPU mit zunehmendem Gehalt an Diolen ansteigt.

Zur Herstellung der TPU werden die Aufbaukomponenten (a), (b) und (c) in Gegenwart von Katalysatoren (d) und gegebenenfalls Hilfsmitteln (e) und/oder Zusatzstoffen (f) in solchen Mengen zur Reaktion gebracht, daß das Äquivalenzverhältnis von NCO-Gruppen der Diisocyanate zur Summe der Hydroxylgruppen oder Hydroxyl- und Aminogruppen der Komponenten (b) und (c) 1:0,85 bis 1,20, vorzugsweise 1:0,95 bis 1:1,05 und insbesondere ungefähr 1: 1,02 beträgt.

(d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, Diazabi-cyclo-(2,2,2)-octan und ähnliche sowie insbesonders organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teilen Polyhydroxylverbindung eingesetzt.

Neben Katalysatoren können den Aufbaukomponenten auch Hilfsmittel (e) und/oder Zusatzstoffe (f) einverleibt werden. Genannt seien beispielsweise Gleitmittel, Inhibitoren, Stabilisatoren gegen Hydrolyse, Licht, Hitze oder Verfärbung, Flammschutzmittel, Farbstoffe, Pigmente, anorganische und/oder organische Füllstoffe und Verstärkungsmittel.

Nähere Angaben über die obengenannten Hilfsmittelund Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 oder der DE-OS 29 01 774 zu entnehmen.

Die Herstellung der TPU nach dem erfindungsgemäßen Verfahren wird im einzelnen auf folgende Weise durchgeführt:

In der 1. Reaktionsstufe werden die Aufbaukomponenten (a) bis (d) und gegebenenfalls (e) und/oder (f) bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise ein Förderband, aufgebracht und mit einer Geschwindigkeit von 1 bis 20 m/Minute, vorzugsweise von 4 bis 10 m/Minute durch eine temperierte Zone von 1 bis 20 m, vorzugsweise von 3 bis 10 m Länge geführt. Die Reaktionstemperatur in der temperierten Zone beträgt 60 bis 200° C, vorzugsweise 100 bis 180° C. In Abhängigkeit vom Diisocyanatanteil in der Reaktionsmischung wird die Reaktion durch Kühlen oder Heizen so gesteuert, daß in der 1. Reaktionsstufe mehr als 50 Mol.-%, vorzugsweise mehr als 80 Mol.-% Diisocyanat umgesetzt werden und die Reaktionsmischung bei der gewählten Reaktionstemperatur erstarrt.

Da die erstarrte Reaktionsmischung nur eine verhältnismäßig geringe Festigkeit aufweist, hat es sich als vorteilhaft erwiesen, die Reaktion auf einem Träger durchzuführen und hierfür eine Folie oder ein Band aus thermoplastischem Kunststoff in Form eines Förderbandes zu verwenden und den Träger als Einzugshilfe in den Extruder der 2. Reaktionsstufe mit einzuführen. Als Trägermaterial haben sich insbesondere solche thermoplastischen Kunststoffe bewährt, die mit dem TPU gut mischbar sind, wie z.B. thermoplastisches Polyurethan mit einem geringen Urethangehalt oder Polyamid. Da die Trägerfolien oder -bänder lediglich eine geringe Schichtdicke, beispielsweise von 0,01 bis 0,08 mm besitzen, ist der Anteil an thermoplastischem Kunststoff im TPU so gering, daß er vernachlässigt werden kann und eine Beeinträchtigung der mechanischen Eigenschaften im Endprodukt nicht ermittelt werden konnte.

Die auf dem Träger erstarrte Reaktionsmischung der 1. Reaktionsstufe wird in der 2. Reaktionsstufe, vorzugsweise gemeinsam mit dem Träger in einen Extruder eingeführt, dort thermoplastisch aufgeschmolzen und die polyadditionsreaktion zu Ende geführt. Da die erstarrte Reaktionsmischung schon mit recht hohen Temperaturen, beispielsweise von 100 bis 200° C in den Extruder eingebracht wird, ist nur noch eine geringe Scherenergie, die üblicherweise 40 bis 120 kJ beträgt, für das Aufschmelzen notwendig. Je nach Diisocyanatgehalt des TPU beträgt die Verweilzeit im Extruder 0,5 bis 15, vorzugsweise 1 bis 6 Minuten bei Reaktionstemperaturen von 140° C bis 250° C, vorzugsweise von 160 bis 230° C. Am Ausgang des Extruders wird das fertige TPU direkt in einer Inertgasatmosphäre, z.B. in Stickstoff, durch Heißabschlag zu Granulat konfektioniert.

Die nach dem erfindungsgemäßen Verfahren hergestellten TPU besitzen sehr gute mechanische Eigenschaften und eignen sich insbesondere zur Herstellung von Polyurethanfolien und anderen Formkörpern.

**Beispiel 1**

Eine Mischung aus
100 Gew.-Teilen eines Poly-butandiol-1,4-adipats mit einer Hydroxylzahl von 54,
12,0 Gew.-Teilen Butandiol-1,4 und
1,0 Gew.-Teilen 2,2',6,6'-Tetraisopropyldiphenyl-carbodiimid wurde auf 80° C erwärmt und mit
46,3 Gew.-Teilen 4,4'-Diphenylmethan-diisocyanat von 50° C in einem Mischkopf intensiv gemischt. Das erhaltene Reaktionsgemisch wurde mit einer Temperatur von 80 bis 100° C auf ein mit einer Polyurethanfolie belegtes, beheiztes Stahlband, welches in einem isolierten Gehäuse lief, aufgebracht. Die am Ende des Stahlbandes erstarrte Reaktionsmischung wurde mit einer Temperatur von 120 bis 150° C gemeinsam mit der Polyurethanfolie kontinuierlich in einen Einwellenextruder von 200 mm Durchmesser mit Gehäusetemperaturen im Einzugsbereich von 160 bis 170° C, in der Mittelzone von 170 bis 200° C und im Austragsbereich von 180 bis 210° C eingezogen und die an der Düsenplatte austretende Schmelze durch Heißabschlag in einer Stickstoffatmosphäre und anschließende Wasserkühlung konfektioniert. Das opake Granulat wurde durch Spritzguß zu Prüfkörpern verarbeitet, an denen die folgenden mechanischen Eigenschaften gemessen wurden:
Härte nach DIN 53 505 Shore A: 85
Zugfestigkeit nach DIN 53 504 [N/mm²]: 52
Bruchdehnung nach DIN 53 504 [%]: 589
Weiterreißfestigkeit nach DIN 53 515
Streifen [N/mm]: 42
Graves [N/mm]: 76
Abrieb nach DIN 53 516 [mm]: 37

Die erhaltenen Polyurethan-Elastomer-Granulate ließen sich zu Schlauchfolien extrudieren.

Die hergestellten Formkörper waren gut entformbar.

**Beispiel 2**

Eine Mischung aus
100 Gew.-Teilen eines Poly-ethylenglykol-butandiol-1,4-adipats mit einer Hydroxylzahl von 57,
27 Gew.-Teilen Butandiol-1,4 und
1,0 Gew.-Teilen 2,2',6,6'-Tetraisopropyldiphenyl-carbodiimid und
90 Gew.-Teilen 4,4'-Diphenylmethan-diisocyanat
wurden analog den Angaben des Beispiels 1 intensiv gemischt und auf ein mit einer Polyurethanfolie belegtes, beheiztes Stahlbank aufgebracht. Die erstarrte Reaktionsmischung wurde gemeinsam mit der Polyurethanfolie mit einer Temperatur von 140 bis 180° C kontinuierlich in einen Einwellenextruder von 200 mm Durchmesser eingeführt, welcher eine Gehäusetemperatur im Einzugsbereich von 170 bis 190° C, in der Mittelzone von 190 bis 220° C und im Austragsbereich von 200 bis 230° C besaß. Die austretende Schmelze wurde durch Heißabschlag mit anschließender Wasserkühlung konfektioniert. Das erhaltene Granulat wurde durch Spritzguß zu Prüfkörpern verarbeitet, an denen die folgenden mechanischen Eigenschaften gemessen wurden:
Härte nach DIN 53 505 Shore D: 59
Zugfestigkeit nach DIN 53 504 [N/mm²]: 44
Bruchdehnung nach DIN 53 504 [%]: 420
Weiterreißfestigkeit nach DIN 53 515
Streifen [N/mm]: 69
Graves [N/mm]: 158
Abrieb nach DIN 53 516 [mm³]: 33
Aus dem Polyurethan-Elastomer-Granulat hergestellte Formkörper waren gut entformbar.

**Patentansprüche**

1. Verfahren zur Herstellung von thermoplastischen Polyurethan-Elastomeren durch Umsetzung von
a) organischen Diisocyanaten,
b) difunktionellen Polyhydroxylverbindungen mit Molekulargewichten von 500 bis 8000 und
c) difunktionellen Kettenverlängerungsmitteln mit Molekularlewichten von 60 bis 400
in Gegenwart von
d) Katalysatoren sowie gegebenenfalls
e) Hilfsmittel und/oder
f) Zusatzstoffe
bei Temperaturen von 60 bis 250° C
dadurch gekennzeichnet, daß man die Umsetzung in 2 Reaktionsstufen durchführt, wobei man in der

1. Reaktionsstufe die Aufbaukomponenten (a) bis (d) kontinuierlich mischt, die Reaktionsmischung auf einen Träger aufbringt und bei Temperaturen von 60 bis 200°C bis zur Erstarrung reagieren läßt und danach in der

2. Reaktionsstufe die erstarrte Reaktionsmischung in einem Extruder aufschmilzt, die Reaktion bei Temperaturen von 140 bis 250°C zu Ende führt und das extrudierte Polyurethan-Elastomere direkt in einer Inertgasatmosphare durch Heißabschlag granuliert.

2. Verfahren nach Anspruch 1, dadurch gekennzeichnet, daß in der 1. Reaktionsstufe mehr als 50 Mol.-% Diisocyanat umgesetzt werden.

3. Verfahren nach Anspruch 1, dadurch gekennzeichnet, daß der Träger in der 1. Reaktionsstufe die Form eines Förderbandes besitzt und das Trägermaterial aus einem thermoplastischen Kunststoff besteht.

4. Verfahren nach Anspruch 1, dadurch gekennzeichnet, daß der Träger als Einzugshilfe zum Einbringen der erstarrten Reaktionsmischung in den Extruder benutzt wird.

5. Verfahren nach Anspruch 1, dadurch gekennzeichnet, daß der Träger aus einem thermoplastischen Polyurethan oder Polyamid besteht und gemeinsam mit der bei Reaktionstemperatur erstarrten Reaktionsmischung in den Extruder eingebracht und extrudiert wird.

6. Verfahren nach Anspruch 1, dadurch gekennzeichnet, daß man als Polyhydroxylverbindungen im wesentlichen lineare Polyesterole aus Adipinsäure und Diolen mit 2 bis 6 Kohlenstoffatomen, Polycaprolacton und/oder Polytetrahydrofuran verwendet.

7. Verfahren nach Anspruch 1, dadurch gekennzeichnet, daß man als organische Diisocyanate 4,4'-Diphenyl-methan-diisocyanat oder 1,5-Naphthylen-diisocyanat verwendet.

## Claims

1. A process for the preparation of thermoplastic polyurethane elastomers by reacting
(a) organic diisocyanates,
(b) difunctional polyhydroxyl compounds with molecular weights of from 500 to 8000, and
(c) difunctional chain extenders with molecular weights of from 60 to 400
in the presence of
(d) catalysts and, if desired,
(e) auxiliaries and/or
(f) additives,
at temperatures of from 60 to 250°C,
wherein the reaction is carried out in two stages, the first reaction stage comprising continuously mixing components (a) to (d), applying the reaction mixture to a carrier and allowing it to react at temperatures of from 60 to 200°C until it solidifies, and the second reaction stage comprising melting the solidified reaction mixture in an extruder, completing the reaction at temperatures of from 140 to 250°C, and directly granulating the extruded polyurethane elastomer by face cutting in an inert gas atmosphere.

2. A process as claimed in claim 1, wherein more than 50 mole percent of diisocyanate are reacted in the first reaction stage.

3. A process as claimed in claim 1, wherein the carrier in the first reaction stage is in the form of a conveyor belt, and the carrier material consists of a thermoplastic.

4. A process as claimed in claim 1, wherein the carrier is used as a means for introducing the solidified reaction mixture into the extruder.

5. A process as claimed in claim 1, wherein the carrier consists of a thermoplastic polyurethane or polyamide and is introduced into the extruder together with the reaction mixture which has solidified at the reaction temperature, and extruded therewith.

6. A process as claimed in claim 1, wherein essentially linear polyester polyols of adipic acid and diols with 2 to 6 carbon atoms, polycaprolactone and/or polytetrahydrofuran are used as polyhydroxyl compounds.

7. A process as claimed in claim 1, wherein 4,4'-diphenylmethane diisocyanate or 1,5-naphthylene diisocyanate is used as the organic diisocyanate.

## Revendications

1. Procédé de préparation d'élastomères thermoplastiques de polyuréthannes par réaction, à des températures de 60 à 250°C,
a) de diisocyanates organiques,
b) de composés polyhydroxylés difonctionnels avec des poids moléculaires de 500 à 8000 et
c) d'agents d'allongement des chaînes difonctionnels avec des poids moléculaires de 60 à 400, en présence
d) de catalyseurs
et éventuellement
e) d'ajuvants et (ou)
f) d'additifs,
caractérisé en ce que la réaction est réalisée en deux stades,
le 1er stade opératoire consistant à mélanger en continu les composants de départ (a) à (d), à déposer le mélange sur un support et à laisser réagir les constituants à des températures comprises entre 60 et 200°C jusqu'à solidification et
le 2e stade opératoire consistant à fondre le mélange réactionnel solidifié dans une extrudeuse, à compléter la réaction à des températures comprises entre 140 et 250°C et à granuler directement l'élastomère de polyuréthanne par découpage à chaud, dans une atmosphère de gaz inerte, à la sortie de l'extrudeuse.

2. Procédé suivant la revendication 1, caractérisé en ce que la transformation du diisocyanate dans le premier stade de réaction est supérieure à 50% molaires.

3. Procédé suivant la revendication 1, caractérisé en ce que, dans le premier stade de réaction, le support est une courroie transporteuse et la matière support est une matière thermoplastique.

4. Procédé suivant la revendication 1, caractérisé en ce que le support est utilisé pour l'introduction du mélange réactionnel solidifié dans l'extrudeuse.

5. Procédé suivant la revendication 1, caractérisé en ce que le support est en polyamide ou polyuréthanne thermoplastique et est introduit avec le mélange réactionnel solidifié à la température réactionnelle dans l'extrudeuse et extrudé de celle-ci.

6. Procédé suivant la revendication 1, caractérisé en ce que les composés polyhydroxylés sont essentiellement choisis parmi les polyester-ols lineaires d'acide adipique et de diols en $C_2$ à $C_6$, la polyhexanolactone et (ou) le polytétrahydrofuranne.

7. Procédé suivant la revendication 1, caractérisé en ce que le diisocyanate est choisi parmi le diisocyanate de 4,4'-diphényl-méthane et le diisocyanate de 1 5-naphthylène.